# EUROPEAN PATENT APPLICATION

(11) **EP 4 660 728 A1**
(43) Date of publication of application: **10.12.2025**
(21) Application number: 24179619.2
(22) Date of filing: 03.06.2024
(51) Int. Cl.: G05B 19/418

(54) **METHOD FOR GENERATING A CURRENT PLANT TOPOLOGY DATA STRUCTURE OF A PLANT**

(71) Applicant: ABB SCHWEIZ AG, 5400 Baden (CH)
(72) Inventor: HOERNICKE, Mario, 76829 Landau (DE); STARK, Katharina, 69469 Weinheim (DE); GRUENER, Sten, 69514 Laudenbach (DE)
(74) Representative: Maiwald GmbH

(57) **Abstract**

The disclosure relates to a method (100) for generating a current plant topology data structure (5) of a plant (10), the method (100) comprising:
- obtaining a first plant topology data structure (3) based on historical data (1) of the plant (10), wherein the historical data (1) has been gathered throughout the operation of the plant (10);
- obtaining a second plant topology data structure (4) based on static data (2) of the plant (10), wherein the static data (2) reflects a current state of the plant (10); and
- generating the current plant topology data structure (5) based on the first plant topology data structure (3) and the second plant topology data structure (4).

## Description

### TECHNICAL FIELD

The present invention relates to a method for generating a current plant topology data structure of a plant, a computer program product, and a data processing system.

### BACKGROUND

Plant topology models represent relationships between different plant components (e.g., pumps, tanks, pipes, sensors, actuators, etc) of a plant. Typically, a relationship between plant components is represented by a product connection (material flow: pump, flow meter, etc.), an energy connection (energy flow: heater, thermo-coupling connection, compressor, pressure connections, etc.) and/or signal connections (information flow: controller, data bus, wireless connection, etc.) within the plant topology models. Specifically, the plant topology models may be in the form of graphs of such connections or flows and may provide input to the execution of certain configuration methods of an automation system of the respective plant, such as for example, methods for increasing plant up-time or decreasing cost of poor quality (COPQ) during engineering.

In many existing plants, the documentation of a plant, even if it is in the form of a plant topology data structure, is not up to date because they were typically created during the engineering phase of the plant. Such existing or older plants are also known as so-called "brownfield" plants. For such plants, even the as-planned and as-built document typically differs a lot. Moreover, the installation of the plant is typically changed over time. Especially older plants undergo various changes in terms of their plant components and the relationships of these throughout the lifecycle of the plant.

Specifically, in brownfield plants, a major problem is the missing information about the plant as it is operated and engineered today. Usually, the documentation of the plant is created at a later stage when a plant goes into operation. But this documentation is usually not updated during plant lifecycle. The plant might undergo little, but also substantial changes during operation, e.g., sensors are added, control code is changed, controllers are tuned. These changes must, of course, be considered when a plant is upgraded with a newer control system. This is a difficult and error prone task because of this missing documentation.

Hence, once a major change of a brownfield plant, like the switch to a newer control system, must be done, it is difficult to identify the current configuration or plant topology model of the plant based on the outdated documentation. Thus, a lot of manual re-engineering must be done, which is error prone, resource intensive and, thus, very expensive. It would be advantageous to have an automatically updated documentation about the status of the plant or plant topology model at any point during the lifecycle of the plant.

### SUMMARY

The above problem or need is at least partially solved or alleviated by the subject matters of the independent claims of the present disclosure, wherein further examples are incorporated in the dependent claims.

According to an aspect of the present disclosure, there is provided a method for generating a current plant topology data structure of a plant, the method comprising:
- obtaining a first plant topology data structure based on historical data of the plant, wherein the historical data has been gathered throughout the operation of the plant;
- obtaining a second plant topology data structure based on static data of the plant, wherein the static data reflects a current state of the plant; and
- generating the current plant topology data structure based on the first plant topology data structure and the second plant topology data structure.

The method is applicable to plants for any type of industrial production (continuous, batch or discrete). The plant may be also referred to as a process plant, since it typically carries out one or more processes, e.g., production processes. The term "plant" as used herein may refer to plants for continuous (process) production as well as to factories for discrete manufacturing. They are independent of an automation system hardware (e.g., the type of a distributed control system, DCS) or the specific domain because respective hardware or domain specific rules may be provided accordingly. Therefore, the embodiments can be used in all running plants, like for example in oil & gas, mining, minerals processing, pulp and paper, cement, food and beverage, power production or chemical production.

The term "historical data" as used herein refers to data that has been gathered throughout the operation, in particular lifecycle, of the plant, which may include the entire lifecycle of the plant or only parts of the lifecycle. In particular, the historical data may include operating data, e.g., as may have been generated from plant components, in particular control objects of the plant, but not only. Historical data may include all operating data up until the moment that the historical data is being obtained. Any historical data in computer-readable format or any other format, which may be transformed into a computer-readable format, may be used. The operating data may be generated by control objects operated in the plant. Based on the historical data in the form of or comprising operating data, the plant topology data structure may be generated with data records in a computer readable or, in other words, interpretable format containing graphs of product/material and energy connections between plant components operated in the plant.

The term "static data" as used herein refers to data that reflects a current state of the plant and is static. Contrary to operating data, static data is not time-dependent on the operation of the plant. Instead, the static data may be including engineering data, which may contain information on how the plant is engineered with its plant components. Accordingly, static data does not change frequently or, in other words, remains substantially constant over time, in particular operation time of the plant. However, the static data may change when changes of the plant itself, e.g., new control system, addition or removal of plant components, and similar are made.

The term "control object" as used herein includes sensors, actuators and any data pre-processing component which are under control of an automation system for automating an operation of the plant. The term "plant component" includes any component which can be active to contribute to the functioning or processing of the plant or its operations (including the control objects). The generated plant topology data structure can be used by existing algorithms to improve plant performance, quality, output, analysis and security. It may be further used to construct a visualization of a plant topology for a plant operator reflecting the current technical state of the plant to allow the operator to monitor the technical state and take corrective action when required.

The method provides for generating a current plant topology data structure, i.e., an up-to-date or, in other words, a latest or current plant topology data structure by combining different plant topology data structures based on different data, namely the historical data and the static data. The first plant topology data structure and the second plant topology data structure may not be complete or, in other words, reflect the entirety of the plant in terms of its plant components and the relationships between these. Instead, parts of the topology data may be missing. Typically, the historical data would not have the same information about the plant as the static data. However, by combining both, the first and the second plant topology data structure, both of which are based on different data as described herein, it may be possible to provide an enhanced plant topology data structure, reflecting not only as much as possible of the topology of the plant but also being as up-to-date as possible by including the historical data, in particular until or shortly before the moment of generating the current plant topology data structure, and the static data at that moment. Hence, the generated current plant topology data structure is a particularly complete and up-to-date representation of the state of that plant at that moment.

The method may be in particular a computer-implemented method. This means that one, several, or all of the steps of the method may be carried out by a data processing system. A data processing system may be or comprise one or more data processing apparatuses or computers, which may be able to carry out the steps of the method. The data processing system or the one or more computers may generally comprise a processing unit, e.g., a CPU, and a computer program product in the form of a computer-readable storage medium, which may have stored thereon a computer program. The processing unit may be executing instructions stored on that computer program product to execute the steps of the method. The data processing system may further comprise one or more interfaces, e.g., wireless or wired, for data connection to one or more computers or systems of the plant. Thereby, the data processing system may be obtaining data from the plant, e.g., the historical data and/or the static data. Also, the data processing system may thereby provide data to the plant, e.g., based on any usage of the current plant topology data structure as explained herein.

The current plant topology data structure may be indicative of a graph model indicating relationships between different plant components of the plant, in particular for a cluster of components, e.g., control objects. Similarly, the first and the second plant topology data structures may be indicative of graph models but, as described previously, not be complete. The graph model may be of any ontology. The graph model may including edges and nodes. The nodes may be representing the plant components, e.g., control objects, and the edges or lines the relationships between them. The graph model may be visualized with its edges and nodes, e.g., on a display, partially, e.g., for a part of the plant, or fully, i.e., for the entire plant, in case the current plant topology data structure is complete in that regard. Depending on the particular plant, there may be many different plant components used in the plant, e.g., pumps, tanks, pipes, sensors, actuators, etc., some of which may be control objects of the plant. The relationships between the plant components may be represented by a product connection (e.g., material flow: such as between pump, flow meter, etc.), an energy connection (e.g., energy flow: such as between heater, thermo-coupling connection, compressor, pressure connections, etc.) and/or signal connections (e.g., information flow: as such between controller, data bus, wireless connection, etc.).

The generating of the current plant topology data structure may comprise combining the first plant topology data structure and the second plant topology data structure with one another. In particular, both, the first and the second plant topology data structure, may be combined in a single graph model. Hence, all dependencies or relationships between plant components may be visualized by a single (dependency) graph. For the combination of both plant topology data structures into the current plant topology data structure, first, similar and/or different information between both plant topology data structures may be identified. Then, the current plant topology data structure may be generated based on the similar information. Further, because typically the first plant topology data structure based on the historical data will contain different information than the second plant topology data structure based on the static data, the different information may be used from one or both of the different plant topology data structure to supplement the current plant topology data structure. In particular, the two graph models or graphs resulting from the historical data and its information and the static data and its information will not be the same. For example, the graph from the historical data may not contain any connection in the process flow since it may be purely based on correlating signals. The graph from the static data on the other hand might not have all the connections between the signals since it may only contain direct dependencies or, in other words, relationships. Hence, propagation of signals through the plant cannot be found but might be there. Hence, when combining the two graphs, a more complete and current (dependency) graph of a plant topology data structure of the plant may be obtained.

The obtaining of the first plant topology data structure and the second plant topology data structure may comprise:
- crawling through the historical data and the static data for information to be used for the first plant topology data structure and the second plant topology data structure; and
- analyzing the crawled information for obtaining, in particular generating, the first plant topology data structure and the second plant topology data structure.

Hence, instead of manually processing the historical data and the static data, an automatic processing by a crawler or, in other words, information crawler may be used, which finds all information to be used for the first and the second plant topology data structure, analyses it, e.g., for its type, content, relevancy, and/or similar, and in particular generates the first plant topology data structure and the second plant topology data structure.

The method may further comprise:
- obtaining an updated first plant topology data structure based on updated historical data of the plant and/or an updated second plant topology data structure based on updated static data of the plant; and
- updating the current plant topology data structure based on the updated first plant topology data structure and/or the update second plant topology data structure.

In other words, the method may be iteratively performed based on updated first and/or second plant topology data structure, such that it may be kept always up-to-date. In particular, the current plant topology data structure may be periodically updated. For example, the method may be executed on an hourly, daily, weekly or monthly basis to keep the current plant topology data structure up-to-date. Specifically, an evergreen façade may be provided for a brownfield plant or installation thereby. In this way, an operator of the plant will always have the latest plant topology data structure visualized and thus have an up-to-date starting point for making decisions for the operation of the plant or changes thereof, e.g., implementation of a new control system for the plant. For example, the updating of the current plant topology data structure may be important when the operation of the plant has changed significantly, which is thus being reflected in the historical data. Or, for example, the updating of the current plant topology data structure may be important when engineering changes of the plant have been made, e.g., plant components have been replaced or new software was provided.

The method may further comprise:
- comparing the current plant topology data structure with an as-planned and/or as-built documentation of the plant;
- determining differences between the current plant topology data structure and the as-planned and/or as-built documentation; and
- visualizing the determined differences and/or updating he as-planned and/or as-built documentation based on the determined differences.

In particular, the method may comprise updating the as-planned and/or as-built documentation of the plant based on the visualized determined differences. Thereby, also an as-planned and/or as-built documentation of the plant may be updated based on the visualized determined differences. Typically, for a brownfield plant, the as-planned documentation of the plant will differ significantly from the as-built documentation because usually a lot of changes are made after the planning of the plant. Further, there may not even be an as-built documentation. Accordingly, using the visualized determined differences, it may specifically be possible to provide an as-built and up-to-date documentation of the plant even if the documentation has never been updated.

Additionally, or alternatively, the method may further comprise:
- generating a documentation of the plant based on or from the current plant topology data structure.

Hence, the documentation of the plant may be generated from the current plant topology data structure, in particular alone therefrom, or from the as-planned and/or as-built documentation, in particular the determined differences between it and the current plant topology data structure as explained above.

The documentation may be comprising a block-flow diagram and/or a piping-and-instrumentation diagram. These are typically most-valuable when it comes to using the documentation of the plant.

The historical data may relate to, in particular include, one or more (any combination or all) of the following: operational data indicative of an operation of the plant, maintenance data indicative of a maintenance of the plant, or down-time data indicative of a down-time of the plant. The operational data may include for example operating data such as setpoint data from plant components and/or control data from the control objects of the plants, e.g., in the form of sensor data, and similar. The maintenance data may include for example information about when, why and for how long the plant was maintained and what has been maintained, e.g., which plant component(s) or object clusters have been maintained. The down-time data may for example include information about when, why and for how long the plant was down, e.g., due to maintenance, errors or any other reasons.

The static data may relate to, in particular include, one or more (any combination or all) of the following: an as-planned and/or as-built documentation of the plant, a control code, a human-machine-interface, or tags. The second data may be at least partially or entirely from a process control system of the plant, in particular from engineered information within it. For example, the tags may be obtained from the process control system. Usually, a process control system contains this information, and some may also contain information about the type of the tags. Generally, a tag may be or comprise a name, reference and/or identifier of a plant component, e.g., a control object, or any type of plant component as explained herein. From such tag, relevant information with respect to the plant topology may be extracted by anaylzing the tag. For the human-machine-interface, in particular images thereof, e.g., in the form of screenshots, may be used. The information from images of the human-machine-interface may be analysed to therefrom extract the relevant information regarding the plant topology. Generally, a human-machine-interface may be herein understood as a control interface accessible for a human for controlling a machine or influencing a control of a machine, which may be a part of the plant or the entire plant, e.g., a part including several plant components. The control code may be from the process control system and/or an automation system of the plant. Such automation system, in particular of the process control system, may be configured to automate the process or processes of the plant, e.g., chemical processes for producing a chemical, oil, gas and similar. The control code may be the code of such automation system. In particular, the control code may be in the form of structured text or computer code, e.g., in a programming language such as from IEC61131-3.

The obtaining of the first plant topology data structure may comprise generating the first plant topology data structure based on the historical data. Additionally, or alternatively, the obtaining of the second plant topology data structure may comprise generating the second plant topology data structure based on the static data.

Moreover, the method may further comprise:
- generating a code for automation of a control process of the plant and/or a human-machine-interface for a controlled process of the plant based on the current plant topology data structure.

The code may be a control code, e.g., as structured text and/or computer code, for an automation system of the plant. Thereby, it is also possible to conveniently update an existing control code of the automation system based on changes of the plant because the current plant topology data structure is always up-to-date. Similarly, it is additionally or alternativey possible to update the human-machine interface, e.g., its visualization, for a process that may be controllable by a human via the human-machine-interface.

Additionally, or alternatively, the method may further comprise:
- identifying causes of errors of plant components of the plant and/or faulty concurrences between plant components of the plant based on the current plant topology data structure.

For example, there may be errors of plant components and considering the up-to-date plant topology data structure, it may be easy to identify the causes of these errors. Similarly, or alternatively, faulty, including undesired or unwanted, concurennces between plant components may be identified based on the current plant topology data structure.

According to a second aspect of this disclosure, there is provided a computer program product comprising instructions which, when executed by a data processing system, causes the data processing system to carry out the method of the first aspect.

The computer program product may be a computer program or computer programs as such, meaning a computer program consisting of or comprising program code to be executed by the data processing apparatus, in particular computer. Alternatively, the computer program product may be a product such as a data storage, in particular computer-readable data storage medium, on which the computer program may be temporarily or permanently stored.

According to a third aspect of this disclosure, there is provided a data processing system configured to carry out the method according to the first aspect of this disclosure.

For example, the data processing system may comprise the computer program product or at least be connected to it such that it may execute the instructions of the computer program.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a flow chart of a method for generating a current plant topology data structure of a plant and a data processing system for carrying out the method of Fig. 1;
Figure 2 shows static data in the form of a list of tags of the plant of Fig. 1;
Figure 3 shows static data in the form of a human-machine-interface of the plant of Fig. 1;
Figure 4 shows static data in the form of several control codes of the plant of Fig. 1 and second plant topology data structure generated based on the control codes;
Figure 5 shows a second plant topology data structure generated from the static data of Figs. 2 to 4;
Figure 6 shows a combination of a first plant topology data structure with a second plant topology data structure for generating a current plant topology data structure according to the method of Fig. 1;
Figure 7 shows a comparison between the current plant topology data structure from Fig. 6 with an as-planned and/or as-built document of the plant of Fig. 1; and
Figure 8 shows a generation of a documentation of the plant of Fig. 1 based on the current plant topology data structure.

The Figures are schematic only and not true to scale. In principle, identical or like parts, elements and/or steps are provided with identical or like reference numerals in the Figures.

### DETAILED DESCRIPTION OF THE INVENTION

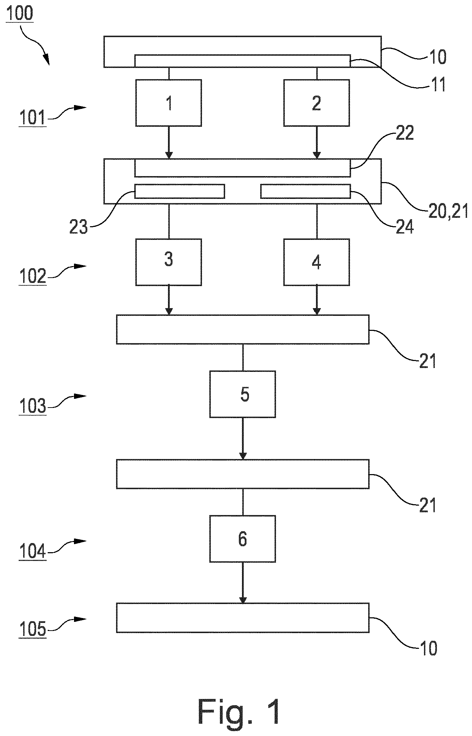

Figure 1 shows a plant 10 with a computer 11 in communication with a data processing system 20, specifically a data processing apparatus 21, e.g., a computer, thereof. For example, an interface of the computer 11 may be communicatively coupled to an interface 22 of the data processing apparatus 21.

Through the communicative coupling, the plant 10 provides the data processing system 20 with historical data 1 of the plant 10, wherein the historical data 1 has been gathered throughout the operation, in particular lifecycle, of the plant 10, in particular is in the form of operating data of the plant 10. Further, through the communicative coupling, the plant 10 provides the data processing system 20 with static data 2 of the plant 10, the static data reflecting the current engineering state of the plant 10. Both, the obtaining of the historical data 1 and the obtaining of the static data 2 at the data processing system 20 forms a step 101 of a method 100 for generating a current plant topology data structure 5 of the plant 10.

The data processing apparatus 21 further comprises a processing unit 23, e.g., a CPU, and a computer program product 24, on which instructions may be stored to be executed by the processing unit 23 to carry out the method 100. As shown in Fig. 1, the data processing system 20 may comprise several data processing apparatuses 21 carrying out the steps 101, 102, 103, 104 of the method 100 as described herein below, or the same data processing apparatus 21 may be carrying out all of the steps 101, 102, 103, 104 of the method 100. To do so, a crawler may be used which may be crawling through the historical data 1 and the static data 2 for information to be used for the first plant topology data structure 3 and the second plant topology data structure 4. The crawler may be a piece of software executed by the data processing apparatus 21 and stored on the computer program product 24, for example. Then, the crawler or generally the data processing apparatus 21, may analyze the crawled information for obtaining the first plant topology data structure 3 and the second plant topology data structure 4.

In a step 102 of method 100, the data processing apparatus 21 of the data processing system 20 generates a first plant topology data structure 3 from the historical data 1 and a second plant topology data structure 4 from the static data 2.

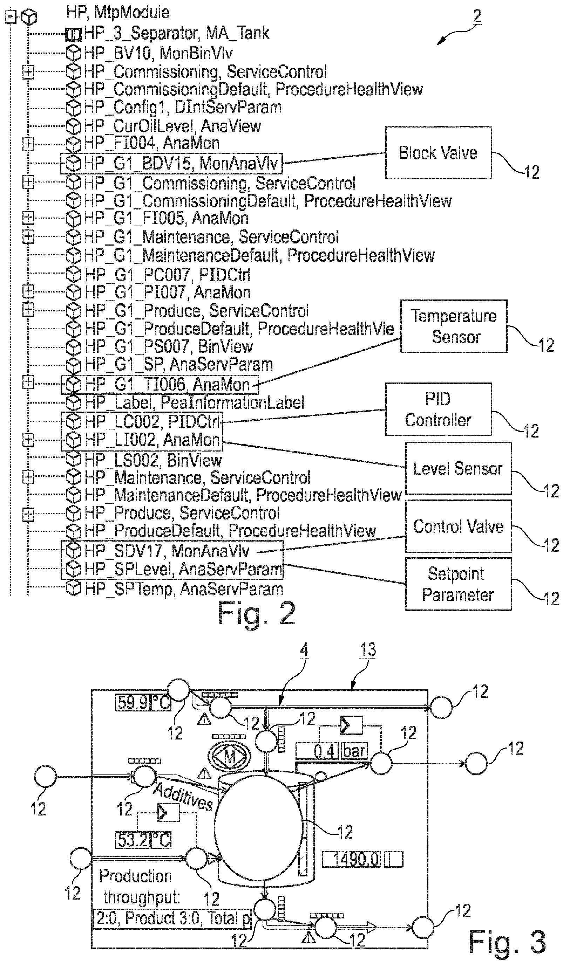

Generally, for generating the first plant topology data structure 3 from the historical data 1, the historical data 1 may be operating data. Moreover, specifically, the data processing system 20 may be communicatively coupled with one or more control objects as plant components 12 (see Fig. 3, for example) of an automation system for operating the plant 10 via the computer 11. The control objects may include sensors and actuators but may also include any kind of data pre-processing components. The plant 10 may also include further plant components 12 which are not control objects. For example, a tank is an example of such a further plant component. The control objects provide operating data (or operations data) which are typically indicative of the technical state of the respective control object. In some cases, the operating data may also be indicative of the technical state of a further plant component 12. For example, a level meter sensor value may be indicative of the filling level of the tank. The historical data 1 in the form of operating data is received by the data processing system 20 via the computer 11 or its interface of the plant 10. Thereby, the historical data 1 in the form of operating data may be received online directly from the control objects during the operation of the plant 10. Alternatively, a storage device (not shown) may be used to record operating data and provide the historical (recorded) data to the computer 11. The storage device can be part of the plant 10 or it may be a remote storage computer (e.g., a cloud server). A tag list storing a list of signals (tags) of at least such control objects which provide or have provided operating data to be used for the generation of the first plant topology data structure 3 may be provided by the computer 11 alongside the historical data 1. Together with each signal, the corresponding control object and its respective type may be stored. The information for the tag list is typically known in the automation system of the plant 10 and can be retrieved from there via the computer 11. Alternatively, the information may be provided in electronic files with an appropriate file format (e.g., as a spreadsheet, a database table, or as an XML file). Obtaining the tag list of signals generated by at least a subset of control objects from the respective data source can be seen as an initialization step. Thereby, the subset includes at least such control objects which provided operating data during a period of time which is selected for the construction of the first plant topology data structure 3. By using the information from the tag list for each received signal of the operating data, the data processing system 20 can determine the respective control object and their types. This mapping function may be implemented as a function of a rule engine (not shown). The received operating data and the tag list may be in particular provided as inputs to the rule engine to perform this mapping function. The rule engine can then apply two sets of rules: a first rule set and a second rule set. The first rule set may be directly applied to the received operating data and includes rules to identify a plurality of object clusters. The first rule set can include logical rules that may be domain or even project specific. The first rule set detects correlations between the operating data of control objects. If a correlation is detected it is an indicator that a material connection, an energy connection or an information connection exists between two control objects showing such correlation. Control objects showing such a correlation (i.e., having a connection) are referred to as connected control objects within an object cluster herein. The results of the application of the first rule set to the operating data are typically chains of (connected) control objects where sometimes the order is not 100% fixed. There may be control objects in the plant 10 which do not appear in a chain because they had no impact on the received operating data. For example, an open valve that did not influence the process at all during the monitoring or historic period for the operating data cannot be identified by the data processing system 20 and is therefore not included in the respective chain of control objects. As already mentioned, the first rule set can be applied to historic operating data including online operating data during normal plant operation or other operation modes (e.g., maintenance mode). Some rules can recognize correlations for "steady state" operation, other rules can recognize a "state change" in the plant operation and inspect the response of the plant operation. The application of the first rule set can be seen as a learning period where the result is a set of object clusters. It is advantageous to select a monitoring period for the learning phase where operating data is received from a plurality of operation modes of the plant 10. Control objects of the plant 10 that have never been used during the monitoring time period cannot be identified (e.g., control objects of an emergency cooling system during normal operation). To summarize, the application of the first rule set to the received operating data OD results in a set of object clusters where every control object included in one or more of the object clusters was used at least once during the monitoring period. The rule engine can apply the second rule set to the identified plurality of object clusters in parallel to the identification step of the object clusters (as soon as some object clusters have been identified) or sequentially after the first rule set processing is finished. The second rule set may have rules to check if some control objects are included in multiple object clusters. If a control object is part of at least a first and a second object cluster it can be seen as a merging anchor for combining the first object cluster and the second object cluster. In such a case the second rule set may merge the first and second object clusters around the merging anchor by consistently adding all connected control objects of the first and second object clusters to the combined object cluster. Further, the second rule set may have consistency rules to reason about the order of control objects. Further, it may include consistency rules to reason about the existence of intermediate control objects (control objects not active or without impact during the monitoring period). To summarize, the second rule set can validate the consistency of combinations of object clusters identified by the first rule set for different sets of operational data at different points in operation time, and finally select one consistent connection scenario from one or more alternative connection scenarios. In other words, the second rule set may be configured to combine the object clusters identified by the first rule set into the overall (at least partial) topology. A generator may then generate for a selected connection scenario representations of the respective control objects and representations of the connections between the control object representations in the first plant topology data structure 3.

For generating the second plant topology data structure 4 from the static data 2, Figs. 2 to 5 give examples of the types of static data 2 that may be used and how the generating may be achieved.

For example, as shown in Fig. 2, the static data 2 may be retrieved by the plant 10 from a process control system thereof and the engineered information within. Here, in a first step, the tags as illustrated in the list or description of tags of Fig. 2 can be obtained from the process control system of the plant 10. Usually, a process control system contains this information, and some also contain information about the type of the tags. Here, Fig. 2 shows the tags, with their essential type, like Analog Monitor for transmitters or Analog Valve for control valves. In Fig. 2, some tags are highlighted and mentioned as respective plant component 12, in particular control object, which will be used in the following as examples.

If the type of the tag is known from the process control system, or a more specific type is needed (e.g., level transmitter instead of analog monitor), this can usually be generated from tag names, which in most naming conventions contain the type abbreviation, such as "L" for level or "P" for pressure. With that information extracted from the process control system, the nodes of the second plant topology data structure 4 may be generated.

Another additional or alternative example for the static data 2 is a human-machine-interface 13 from the process control system of the plant 10 or its process control system as shown in Fig. 3. Here, for example, an image in the form of a screenshot of the human-machine-interface 13 with its plant components 12 is shown. Based on this human-machine-interface 13, a graph of the second plant topology data structure 4 with the plant components 12 as nodes and edges connecting them to illustrate their relationship to one another has been generated in step 102 of method 100. The second plant topology data structure 4 is exemplary shown as an overlay of the human-machine-interface 13. For the generation of the second plant topology data structure 4, the data processing system 20 identified the respective plant components 12 and the connections between them to generate the nodes and edges of the second plant topology data structure 4. The resulting graph of this example essentially contains the connection of the tags and the connections in the process flow (in this example pipes).

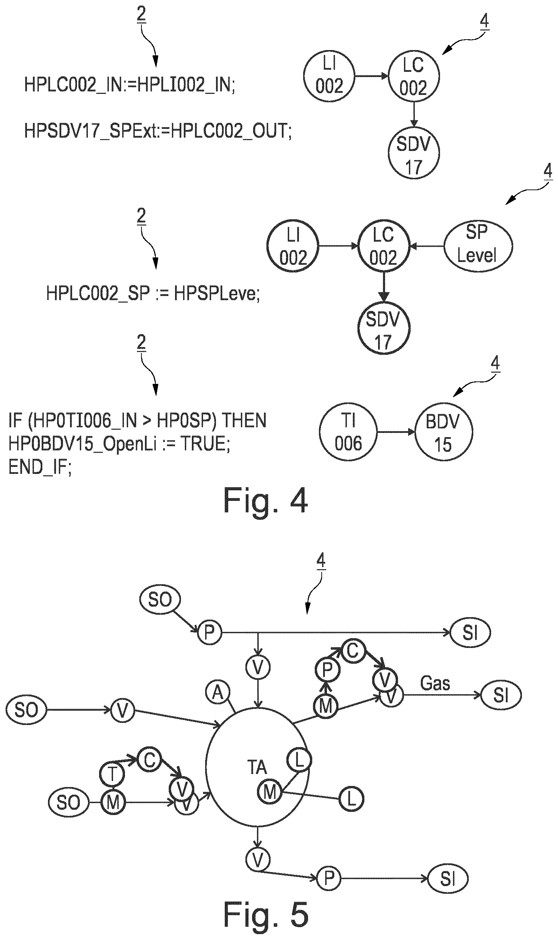

Yet another additional or alternativ example for the static data 2 is shown in Fig. 4 in the form of different control codes, e.g., from a process control and/or automation system of the plant 10, which may be used by the data processing system 20 to generate the second plant topology data structure 4 therefrom as illustrated exemplary for the different control codes in Fig. 4. The separate second plant topology data structures 4 for each of the different control codes may be combined with one another. For programming the control code of the automation system, usually IEC61131-3 languages or similar are being used. For simplification, structured text is exemplary shown for the control codes, but the concept is convertible to other IEC61131-3 languages.

In the example of Fig. 4, first, control loops can be evaluated. A control loop might consist of an input, given by a transmitter, a controller, and an actuator. In the control code, simply the inputs and outputs are connected to each other, which results in simple equations as shown in the top control code of Fig. 4. The resulting dependency graph in this example is a LI002 (transmitter) connected to LC002 (controller) connected to SDV17 (control valve). With this description, already some dependencies and thus edges for the graph connecting the nodes in form of the plant components 12 are found. Other equations, of whatever type, show dependencies between tags, as well. The control code in the middle of Fig. 5 for example shows the assignment of a setpoint to a controller. This is also a dependency that is of importance and may be added to the second plant topology data structure 4. Furthermore, conditional statements, such as if-then-else logic, show dependencies. The example shown in the bottom control code of Fig. 4 shows that there is a dependency between the temperature transmitter TI006 and the control valve BDV15. Since the control valve is always closed when the temperature is higher than the setpoint for it, there is a direct dependency between those two tags.

Specifically, as shown in Fig. 5, the static data 2 from all of the examples of Figs. 2 to 4 may be combinatory used to generate the second plant topology data structure 4 as shown in Fig. 5. Here, A represents an Agitator, M represents a Measurement Point, SI a Sink, SO a Source, L a Level Sensor, T a Temperature Sensor, P a Pressure Sensor, C a Controller, P a Pump, V a Valve and TA a Tank. The shown graph of the second plant topology data structure 4 contains material flow and information flow for this example of a plant 10.

Generally, the nodes in a plant topology data structure 3, 4, 5 or a (dependency) graph thereof may be IDs of the respective connected control objects and/or plant components 12, in particular such which are belonging to object clusters. Connection representations may be implemented as corresponding relationships between connected control objects (e.g., parent-child relations). In one embodiment, the object representations may include graphical symbols for the respective control objects/plant components 12 and the connection representations may include graphical connection elements (e.g., lines or edges) allowing to generate a graphical visualization of at least a partial plant topology based on the representations stored in the plant topology data structure. Such a graphical visualization provides a snapshot of the technical plant operation state to a plant operator or to a system engineer of the automation system who can then take corrective action if the technical state indicates a corresponding need. In other words, the generated current plant topology data structure 5 can be used for monitoring the technical state of the plant based on operating data, either by enabling the application of automated algorithms as disclosed earlier (e.g. alarm grouping, evaluation of first-up alarms, anomaly analysis in flow networks, etc.), or by providing to a user a presentation of the topology reflecting the technical state of the plant for monitoring and taking corrective actions if required.

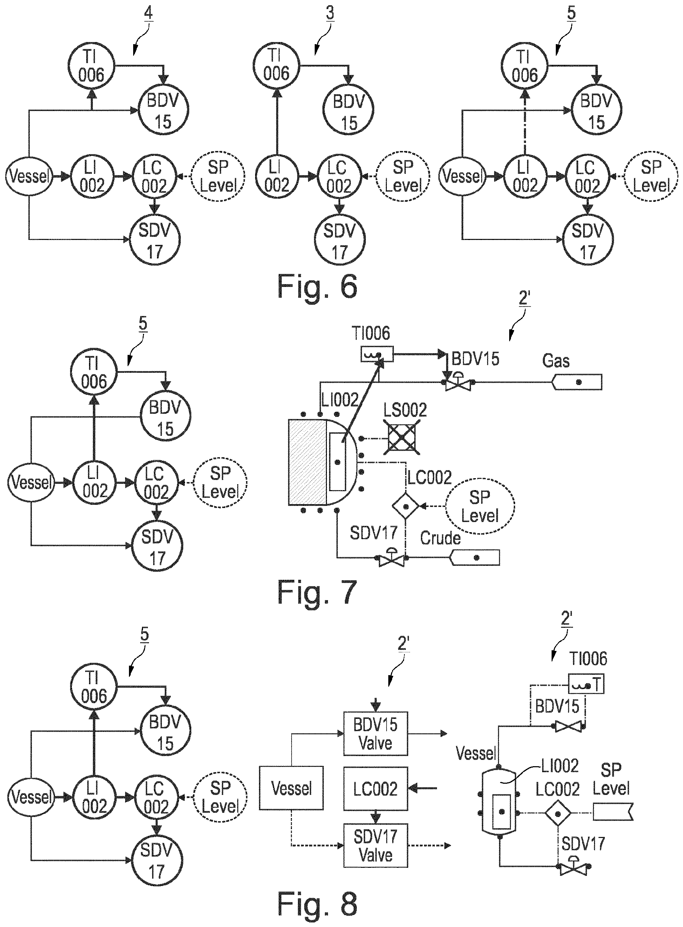

In step 103 of method 100, the current plant topology data structure 5 may be generated by the data processing system 20 through combining the first plant topology data structure 3 with the second plant topology data structure 4. An example of such combination is shown in Fig. 6, where the (dependency) graph of the second plant topology data structure 4 is combined with the first plant topology data structure 3 to generate the current plant topology data structure 5. The dependency graph from the historical data 1 contains a connection between LI002 and TI006, which is not visible in the other dependency graph from the static data 2. Thus, those signals might influence each other. The dependency graph from the static data 2 in turn contains the process connections, which are missing in the other graph from the historical data 1. Accordingly, it must be evaluated which parts have to be included in a combined, resulting dependency graph of the current plant topology data structure 5. One possible combination of the two graphs is shown as the current plant topology data structure 5 in Fig. 6.

Then, in a step 104 of method 100, the second plant topology data structure 4 may be used, e.g., to generate a code for automation 6 of a control process of the plant and/or a human-machine-interface 13 for a controlled process of the plant 10. Consequently, in step 105 of method 100, the code for automation 6 and/or the human-machine-interface 13 generated thereby may be transmitted to the plant 10, where these may be applied.

Moreover, it is possible to use the current plant topology data structure 5 to evaluate the as-is engineering of the plant 10 and it can be used to compare it with the as-planned and/or as-built documentation 2' of the plant 10 as exemplary shown in Fig. 7, which may additionally or alternatively also form part of the static data 2, and/or to generate the documentation 2' of the plant 10, e.g., in the form of flow diagrams and piping and instrumentation diagrams, as exemplary shown in Fig. 8.

For example, if the plant 10 has an as-planned and/or as-built documentation 2' in a computer interpretable format, this can be compared and updated using the dependency graph of the current plant topology data structure 5. An example is given in Fig. 7. It shows that several dependencies are missing in the as-planned and/or as-built documentation 2'. Additionally, the dependency to the SP parameter was not documented and can be added. Finally, the as-planned and/or as-built documentation contains a level switch which was not discovered within the dependency graph. Thus, it might not be there anymore. Technically, the comparison can be made based on the tag names. Tag names are usually stable, meaning they can be used to identify the equipment in the plant. From the tags, discovered by their names, the dependencies to other tags can be evaluated. This simple procedure can be used for all tags and hereby, the discrepancies can be detected.

If the plant 10 does not have any as-planned and/or as-built documentation 2' in a computer interpretable format, this can be generated from the dependency graph of the current plant topology data structure 5 if needed. Two documentations that are usually used to document a process plant 10 are, besides others, block flow diagram (BFD) and piping and instrumentation diagram (P&ID).

Fig. 8 shows an example for the generation of BFD and a P&ID. Since the dependency graph of the current plant topology data structure 5 is fully typed (nodes have a type, such as level transmitter, control valve, etc.), the controllers and valves that are usually displayed in a BFD can be discovered and added to the BFD. The dependencies between those and the plant components 12 (e.g., a vessel) can then be used to create the edges in the BFD. If the dependency graph also contains typed edges, even the fluid between the major equipment can be identified. Additionally, the P&ID can be generated in a similar manner. The difference is that the edges do not contain a type and that simply all plant components 12 are added, and all dependencies are added.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods, steps and other features such as plant topology data structure as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of t 5% is also indicated by the terms "about" and "approximately" used herein with respect to a numerical value.

Any reference signs in the claims should not be construed as limiting the scope.

## Claims

1. A method (100) for generating a current plant topology data structure (5) of a plant (10), the method (100) comprising:
- obtaining a first plant topology data structure (3) based on historical data (1) of the plant (10), wherein the historical data (1) has been gathered throughout the operation of the plant (10);
- obtaining a second plant topology data structure (4) based on static data (2) of the plant (10), wherein the static data (2) reflects a current state of the plant (10); and
- generating the current plant topology data structure (5) based on the first plant topology data structure (3) and the second plant topology data structure (4).

2. The method (100) of claim 1, wherein the current plant topology data structure (5) is indicative of a graph model indicating relationships between different plant components (12) of the plant (10).

3. The method (100) of claim 1 or 2, wherein the generating of the current plant topology data structure (5) comprises combining the first plant topology data structure (3) and the second plant topology data structure (4) with one another.

4. The method (100) of any one of the previous claims, wherein the obtaining of the first plant topology data structure (3) and the second plant topology data structure (4) comprises:
- crawling through the historical data (1) and the static data (2) for information to be used for the first plant topology data structure (3) and the second plant topology data structure (4); and
- analyzing the crawled information for obtaining the first plant topology data structure (3) and the second plant topology data structure (4).

5. The method (100) of any one of the previous claims, wherein the method (100) further comprises:
- obtaining an updated first plant topology data structure (3) based on updated historical data (1) of the plant (10) and/or an updated second plant topology data structure (4) based on updated static data (2) of the plant (10); and
- updating the current plant topology data structure based on the updated first plant topology data structure and/or the update second plant topology data structure.

6. The method (100) of any one of the previous claims, wherein the method (100) further comprises:
- comparing the current plant topology data structure (5) with an as-planned and/or as-built documentation (2') of the plant (10);
- determining differences between the current plant topology data structure (5) and the as-planned and/or as-built documentation (2'); and
- visualizing the determined differences and/or updating he as-planned and/or as-built documentation (2') based on the determined differences.

7. The method (100) of any one of the previous claims, wherein the method (100) further comprises:
- generating a documentation (2') of the plant (10) based on the current plant topology data structure (5).

8. The method (100) of claim 6 or 8, wherein the documentation (2') comprises a block-flow diagram and/or a piping-and-instrumentation diagram.

9. The method (100) of any one of the previous claims, wherein the historical data (1) relates to one or more of the following: operational data indicative of an operation of the plant (10), maintenance data indicative of a maintenance of the plant (10), or down-time data indicative of a down-time of the plant (10).

10. The method (100) of any one of the previous claims, wherein the static data (2) relates to one or more of the following: an as-planned and/or as-built documentation (2') of the plant, a control code, a human-machine-interface, or tags.

11. The method (100) of any one of the previous claims, wherein the obtaining of the first plant topology data structure (3) comprises generating the first plant topology data structure (3) based on the historical data (1), and/or the obtaining of the second plant topology data structure (4) comprises generating the second plant topology data structure (4) based on the static data (2).

12. The method (100) of any one of the previous claims, wherein the method (100) further comprises:
- generating a code for automation (6) of a control process of the plant (10) and/or a human-machine-interface (13) for a controlled process of the plant (10) based on the current plant topology data structure (5).

13. The method (100) of any one of the previous claims, wherein the method (100) further comprises:
- identifying causes of errors of plant components (12) of the plant (10) and/or faulty concurrences between plant components (12) of the plant (10) based on the current plant topology data structure (5).

14. A computer program product (24) comprising instructions which, when executed by a data processing system (20), causes the data processing system (20) to carry out the method (100) of any one of the previous claims.

15. A data processing system (20) configured to carry out the method (100) of any one of claims 1 to 13.
